# EUROPÄISCHE PATENTSCHRIFT

(11) **EP 0 436 113 B1**
(45) Veröffentlichungstag und Bekanntmachung des Hinweises auf die Patenterteilung: **12.07.1995**
(21) Anmeldenummer: 90122506.0
(22) Anmeldetag: 26.11.1990
(51) Int. Cl.: F23C 9/00, F23C 7/06, F23D 17/00

(54) **Verfahren zum Betrieb einer Feuerungsanlage**
Method for operating a combustion plant
Procédé pour le fonctionnement d'une installation de combustion

(30) Priorität: 01.12.1989 CH 4278/89
(43) Veröffentlichungstag der Anmeldung: 10.07.1991
(73) Patentinhaber: ASEA BROWN BOVERI AG, 5400 Baden (CH)
(72) Erfinder: Knöpfel, Hans Peter, CH-5627 Besenbüren (CH); Pelet, Claude, CH-5243 Mülligen (CH); Peter, Hans, CH-8952 Schlieren (CH)

(56) Entgegenhaltungen:
- EP-A- 0 271 111
- EP-A- 0 321 809
- EP-A- 0 392 158
- EP-A- 0 394 911
- DE-A- 1 956 582
- FR-A- 2 370 235
- GB-A- 2 043 869
- PATENT ABSTRACTS OF JAPAN, Band 8, Nr. 124 (M-301)[1561], 9. Juni 1984; & JP-A-59 27 109 (SANYO DENKI) 13-02-1984

## Beschreibung

### Technisches Gebiet

Die vorliegende Erfindung betrifft ein Verfahren zum Betrieb einer Feuerungsanlage gemäss Oberbegriff des Anspruchs 1. Sie betrifft auch eine Feuerungsanlage zur Durchführung eines solchen Verfahrens.

### Stand der Technik

Bei Feuerungsanlagen für beispielsweise Zentralheizungen wird bei üblicher Bauart der Brennstoff über eine Düse in einen Brennraum eingedüst und dort unter Zuführung von Verbrennungsluft verbrannt. Grundsätzlich ist der Betrieb von solchen Feuerungsanlagen durch einen gasförmigen oder flüssigen Brennstoff möglich. Beim Einsatz eines flüssigen Brennstoffes muss eine gute Zerstäubung des Brennstoffes und eine gute Durchmischung mit der Verbrennungsluft erreicht werden, danmit minimale Noₓ-, Co-, UHC-Emissionen erreicht werden.

Wird demnach ein flüssiger Brennstoff eingesetzt, so ist die Qualität der Verbrennung bezüglich tiefer Schadstoffemissionen weitgehend davon abhängig, ob es gelingt, einen optimalen Vermischungsgrad des Brennstoff/Frischluft-Gemisches bereitzustellen, d.h. eine mögliche vollständige Vergasung des flüssigen Brennstoffs zu gewährleisten. Dabei ist auch auf die Problematik im Bereich des Teillastbetriebes, wie sie in EP-A2-0 166 329 angegangen wird, hinzuweisen. Verschiedene andere bekannt gewordene Versuche, bei Teillastbetrieb magerer zu fahren, sind regelmässig gescheitert, denn hier verschlechtert sich der Ausbrand und die CO/UHC-Emissionen steigen sehr stark an. In der Fachsprache wird dieser Zustand unter der Bezeichnung CO/UHC-NOₓ-Schere umschrieben. Auch der Weg eine Vormischszone für das Brennstoff/Frischluft-Gemisch vor der eigentlichen Verbrennungszone vorzusehen, führt nicht zum Ziel eines betriebssicheren Brenners, denn es besteht hier die immanente Gefahr, dass eine Rückzündung von der Verbrennungszone in die Vormischzone den Brenner beschädigen könnte.

Aus FR-A-2 370 235 ist eine Feuerungsanlage bekanntgeworden, deren Verbrennung mittels eines Diffusionsbrenners aufrechterhalten wird. Als Verbrennungsluft zum Betrieb des Brenners wird ein aus Frischluft und rezirkuliertem Rauchgas gebildetes Gemisch eingesetzt. Zwar ist es richtig, dass bei dieser Technik eine Herabsetzung der Schadstoff-Emissionen, insbesondere der NOx, zu erzielen ist, indessen, wie das Dokument selbst aussagt (Seite 4, Zeile 2 ff.), bleibt das Niveau der Schadstoff-Emissionen beim Betrieb einer solchen Anlage nocht recht hoch, auf jeden Fall so hoch, dass nach neuesten Gesetzgebungen in den wichtigsten Industriestaaten heutzutage für eine solche Anlage keine Betreibungsbewilligung mehr zu bekommen wäre. Was hier nach wie vor fehlt, ist die Sicherstellung einer raschen Verdampfung des Brennstoffes, bevor dieser den Diffusionsbrenner speist, was ursächlich mit der Einmischung des rezirkulierten Rauchgases und der Temperatur der Verbrennungsluft im Zusammenhang steht. Ist eine solche Verdampfung des Brennstoffes nicht vollkommen, dann steigen die NOx-Emissionen unweigerlich sprunghaft in die Höhe.

### Aufgabe der Erfindung

Hier will die Erfindung Abhilfe schaffen. Der Erfindung, wie sie in den Ansprüchen gekennzeichnet ist, liegt die Aufgabe zugrunde bei einem Verfahren und einer Feuerungsanlage der eingangs genannten Art die Schadstoff-Emissionen zu minimieren.

Der wesentliche Vorteil der Erfindung ist darin zu sehen, dass die Frischluft für den Brenner mit einem Anteil Rauchgas gemischt wird, wobei die Rauchgasrezirkulation mit einer mehrstufigen Vorwärmung und einer mehrstufigen Vormischung abläuft. Für eine nahstöchiometrische Verbrennung wird ein Brenner ohne Vormischstrecke eingesetzt, der mit ca. 40 % Rauchgasrückführung betrieben wird. Dabei sollte das Luft/Rauchgas-Gemisch beim Eintritt in den Brenner eine Temperatur von etwa 400 °C aufweisen. Die Erfüllung dieser beiden Bedingungen führt einerseits zu einer ausreichend tiefen Primärzonentemperatur von ca. 1450 °C, was für die Erreichung tiefer NOₓ-Emissionen eine wichtige Voraussetzung bildet, und andererseits zu einer im erwünschten Mass raschen Verdampfung des eingedüsten flüssigen Brennstoffes. Zu diesem Zweck wird ein Teil der Rauchgase im oder nach dem Brennraum der Feuerungsanlage entnommen und in einem externen Gebläse mit Frischluft vermischt. Als zweite Verfahrensstufe wird dieses Gemisch im Brennraum selbst über einen dort vorgesehenen Wärmetauscher weiter erwärmt und danach einem Jet-Injektor zugeführt. Dort werden dann dem Gemisch weitere Rauchgase zugemischt, mit dem Ziel, eine für den Brenner optimale Verbrennungslufttemperatur sowie eine Herabsetzung der O₂-Konzentration bereitstellen zu können. Die Vorteile dieses Systems liegen des weiteren darin, dass durch die allenfalls vorgesehene zweistufige Aufwärmung des Verbrennungsluftgemisches ein besseres Dichteverhältnis für den Jet-Injektor geschaffen wird, d.h., in jenen Fällen, wo eine höhere Leistung des Jet-Injektors verlangt ist, kann diese Vorgabe durch vorgenannte zweistufige Aufwärmung erfüllt werden. Darüber hinaus, da bereits ein Teil der zu rezirkulierenden Rauchgase dem Gebläse zugeführt werden kann, verringert sich bei Inanspruchnahme einer solchen Konfiguration der Anteil Rauchgase, die vom Jet-Injektor gefördert werden müssten. In dem der Wärmetauscher vorteilhaft um die Flamme im Brennraum angeordnet wird, wird dieser Flamme direkt Wärme entnommen, was sich wiederum positiv auf die Bildung von NOₓ auswirkt. Daraus ergibt sich ein zusätzlicher Vorteil der Erfindung, die darin zu sehen ist, dass diese schaltungstechnisch den gegebenen Verhältnissen ohne Zusatzaufwand angepasst werden kann.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnung Ausführungsbeispiele der Erfindung näher erläutert. Alle für das unmittelbare Verständnis der Erfindung nicht erforderlichen Elemente sind fortgelassen. Die Strömungsrichtung der verschiedenen Figuren sind jeweils gleiche Elemente mit den gleichen Bezugszeichen versehen.

### Kurze Beschreibung der Figuren

Es zeigt:
- Fig.1: eine schematische Darstellung einer Feuerungsanlage mit zweistufiger Vormischung und mehrstufiger Vorwärmung;
- Fig.2: einen Wärmetauscher als Vorwärmungsstufe des Verbrennungsluftgemisches für den Brenner,
- Fig.3: einen Brenner für einen Betrieb mit flüssigen und/oder gasförmigen Brennstoffen in perspektivischer Darstellung, entsprechend aufgeschnitten und
- Fig.4: einen Schnitt durch die Ebene V-V in einer schematischen, vereinfachten Darstellung.

### Beschreibung der Ausführungsbeispiele

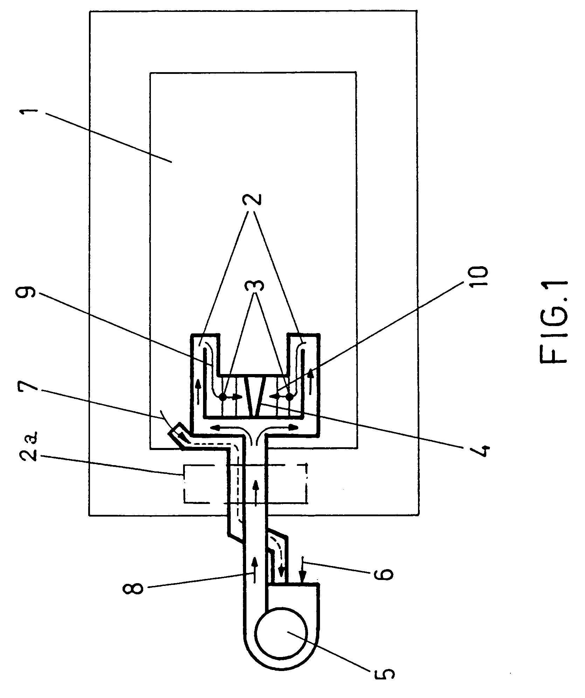

Fig.1 zeigt schematisch eine Feuerungsanlage, in deren Brennraum 1 ein Wärmetauscher 2, ein Jet-Injektor 3, ein Brenner 4 und eine Rauchgasentnahme 7. Ausserhalb des Brennraumes wirkt ein Gebläse 5. Die dort angesaugte Frischluft 6 wird mit einem Anteil Rauchgase, die über die im Brennraum 1 plazierte Rauchgasentnahme 7 herangeführt wird. Dieses Frischluft/Rauchgas-Gemisch 8 wird in den Brennraum 1 zurückgeführt, wobei es den Wärmetauscher 2 durchströmt. Bevor das so vorerwärmte Gemisch 9 dem Brenner 4 als Verbrennungsluft zugeführt wird, erfährt es über eine Reihe von Jet-Injektoren 3 eine weitere Durchmischung mit Rauchgasen, was die Temperatur dieser Verbrennungsluft 10 erhöht. Ein zweiter Wärmetauscher 2a entsteht zwischen dem Rauchgasstrom 7 und dem Frischluft/Rauchgas-Gemisch 8.

Soll der Brenner 4 nahstöchiometrisch betrieben werden, so wird er mit einer ca. 40 %-igen Rauchgasrückführung betrieben, wobei bei zweistufiger Vormischung die Anteile an Rauchgas entsprechend aufgeteilt werden können. Zweite Bedingung ist, dass das als Verbrennungsluft eingesetzte Frischluft/Rauchgas-Gemich 10 beim Eintritt in den Brenner eine Temperatur von ca. 400 °C aufweisen sollte. Diese Vorwärmung lässt sich gemäss Konzeption von Fig. 1 damit erreichen, dass das Gemisch über drei Stufen aufbereitet wird: Eine erste Vorwärmung erfährt die angesogene Frischluft 6 im Gebläse 5, wo eine erste Zumischung mit heissen Rauchgasen 7 stattfinden. Die zweite Vorwärmungsstufe bildet der Wärmetauscher 2, wobei Gemisch 8 auf dem Weg zum vorgenannten Wärmetauscher 2 einen durch den von den Rauchgasen 7 betreibbaren Wärmetauscher 2a durchläuft. Diese Vorkehrung wirkt sich danebst auf das Gebläse 5 positiv aus, insoweit, als dort die kalorische Belastung vermindert wird. Die dritte Vorwärmung findet im Bereich der Jet-Injektoren 3 statt, wo zum zweiten Mal weitere Rauchgase 7 den vorgewärmten Frischluft/Rauchgas-Gemisch 9 zugeführt werden. Bei Erfüllung der genannten beiden Bedingungen (ca. 40 % Rauchgasrückführung und Verbrennungsluft mit ca. 400 °C) lässt sich eine ausreichend tiefe Primärzonentemperatur von ca. 1450 °C erreichen, die eine Bedingung für tiefe NOₓ-Emissionen ist, und zum anderen lässt sich eine rasche Verdampfung der Tröpfchen des flüssigen Brennstoffes erzielen. Die Vorteile der genannten Vormischungen und Vorwärmung über eine oder mehrere Stufen lassen sich allgemein wie folgt zusammenfassen:
Eine höhere Temperatur der Verbrennungsluft 10 bewirkt einen hohen Grad an Brennstoffverdampfung, worauf kleine NOₓ-Emissionen resultieren.
Eine höhere Rezirkulationsrate bewirkt eine weitere Reduktion der O₂-Konzentration in der Verbrennungsluft und damit eine tiefere Flammentemperatur, dadurch können die NOₓ-Emissionen tief gehalten werden.

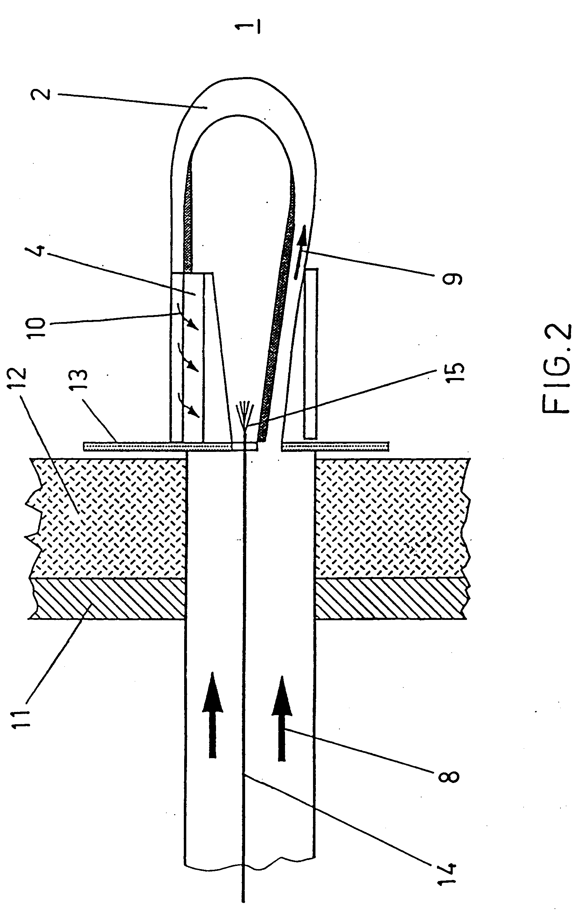

Fig. 2 zeit eine Ausführung des Wärmetauschers 2. Dieser ist im Brennraum 1 plaziert. Das Frischluft/Rauchgas-Gemisch 8 durchströmt den Wärmetauscher 2 und erwärmt sich. Danach wird das Gemisch 9, unter Zumischung weiterer Rauchgase, als Verbrennungsluft 10 dem Brenner 4 zugeführt. Angedeutet ist in Fig. 2 die Türe 11 des Brennraumes 1: Diese besteht inwendig aus einer feuerfesten Isolierung 12, welche ihrerseits von einem nicht mehr ersichtlichen Stahlkasten umgeben ist. Im Brennraum 1 selbst ist eine weitere Platte 13 vorgesehen, welche als Ankoppelung für den Brenner 4 und dem Wärmetauscher 2 dient. In der Zuleitung für das Frischluft/Rauchgas-Gemisch 8 befindet sich auch eine Düse 14 für den Brennstoff zum Betrieb des Brenners 4, mit der angedeuteten Brennstoffeindüsung 15. Bei einer solchen Konfiguration resultiert eine zusätzliche kalorische Aufbereitung des Brennstoffes auf etwa 120 °C, was eine zusätzliche positive Auswirkung auf eine rasche Verdampfung der Tröpfchen eines dort vorzugsweise zerstäubten flüssigen Brennstoffes hat. Diese Zusatzwirkung ist selbstverständlich nur dann gegeben, wenn im Gebläse der Frischluft eine gewisse Menge heisser Rauchgase zugeführt wird, also gemäss Schaltung nach Fig. 1 gefahren wird.

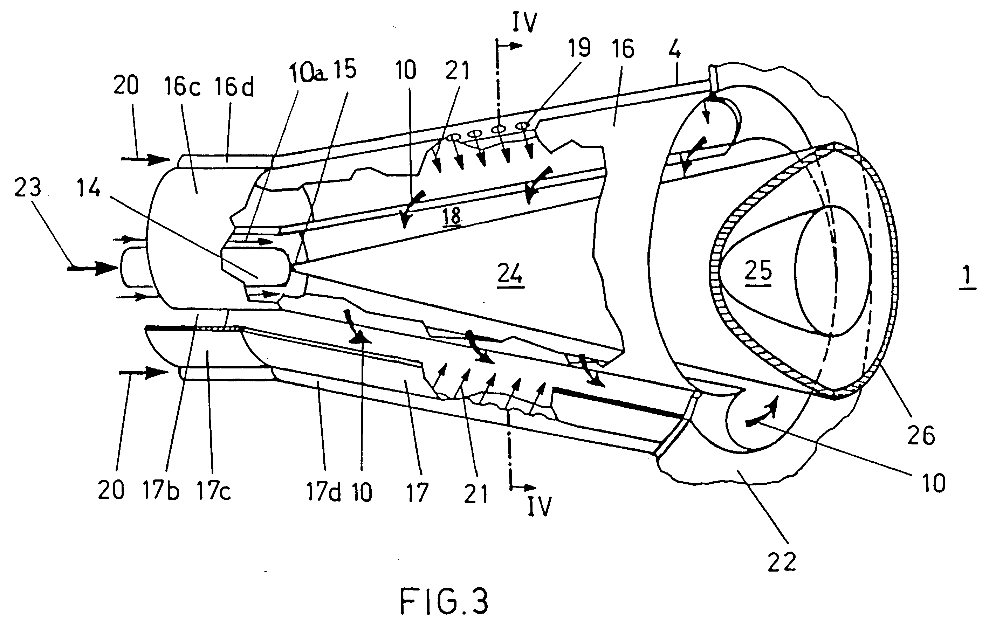

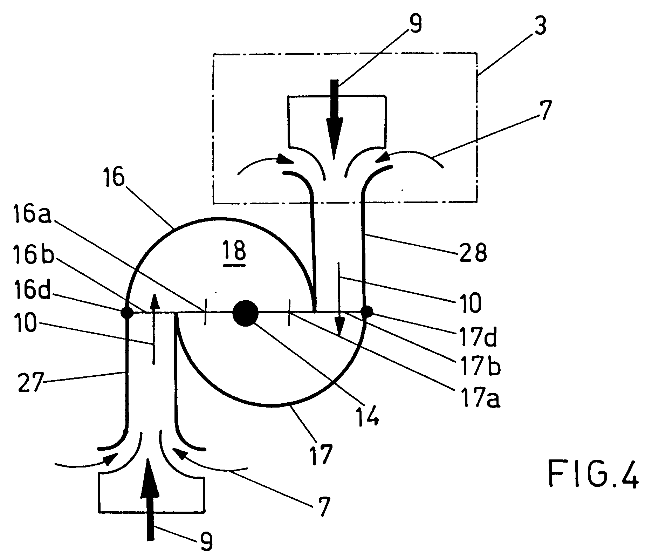

Um den Aufbau des Brenners 4 besser zu verstehen, sollen die Fig. 3 und 4 gleichzeitig herangezogen werden. Des weiteren, damit Fig. 3 übersichtlich bleibt, sind die nach Fig. 4 schematisch gezeigten Mischstrecken und die Jet-Injektoren nicht darin aufgenommen worden.

Der Brenner 4 gemäss Fig. 3 besteht aus zwei halben hohlen Teilkegelkörpern 16, 17, die versetzt zueinander aufeinander liegen. Die Kegelform der gezeigten Teilkegelkörper 16, 17 in Strömungsrichtung weist einen bestimmten festen Winkel auf. Selsbtverständlich können die Teilkegelkörper 16, 17 in Strömungsrichtung eine zunehmende Kegelneigung (konvexe Form) oder eine abnehmende Kegelform (konkave Form) haben. Die beiden letztgenannten Formen sind zeichnerisch nicht erfasst, da sie ohne weiteres nachempfindbar sind. Welche Form schlussendlich zum Einsatz kommt, hängt von den verschiedenen Parametern der Verbrennung ab. Die Versetzung der jeweiligen Mittelachse 16a, 17a der Teilkegelkörper 16, 17 zueinander schafft auf beiden Seiten in spiegelbildlicher Anordnung jeweils einen tangentialen Lufteintrittsschlitz 16b, 17b frei, (Fig. 4), durch welche die Verbrennungsluft 10 (Frischluft/Rauchgas-Gemisch) in den Innenraum des Brenners 4, d.h. in den Kegelhohlraum 18 strömt. Die beiden Teilkegelkörper 16, 17 haben je einen zylindrischen Anfangsteil 16c, 17c, die ebenfalls analog den Teilkegelkörpern 16, 17 versetzt zueinander verlaufen, so dass die tangentialen Lufteintrittsschlitze 16b, 17b vom Anfang an vorhanden sind. In diesem zylindrischen Anfangsteil 16c, 17c ist eine Düse 14 untergebracht. Selbstverständlich kann der Brenner 4 rein kegelig, also ohne zylindrische Anfangsteile 16c, 17c, ausgeführt sein. Beide Teilkegelkörper 16, 17 weisen wahlweise je eine weitere Brennstoffleitung 16d, 17d auf, die mit Öffnungen 19 versehen sind. Durch die Leitungen 16d, 17d werden vorzugsweise gasförmige Brennstoffe 20 tangential über die Lufteintrittsschlitze 16b, 17b zusammen mit der Verbrennungsluft 10 in den Brennraum 4 eingeleitet. Die Lage dieser Brennstoffleitungen 16d, 17d geht schematisch aus Fig. 4 hervor: Die Brennstoffleitungen 16d, 17d sind im Bereich der tangentialen Lufteintrittsschlitze 16b, 17b angebracht, so dass dort auch die Zumischung 21 des gasförmigen Brennstoffes 20 mit der einströmenden Verbrennungsluft 10 stattfindet. Selbstverständlich ist ein Mischbetrieb mit beiden Brennstoffarten möglich. Brennraumseitig 1 weist der Brenner eine kragenförmige Platte 22 auf, durch welche, allenfalls, nicht dargestellte Bohrungen vorgesehen werden, um Verdünnungsluft oder Kühlluft dem vorderen Teil des Brenners 1 zuzuführen. Der durch die Düse 14 vorzugsweise strömende flüssige Brennstoff 23 wird in einem spitzen Winkel in einen Innenraum 18 eingedüst, dergestalt, dass sich in der Brenneraustrittsebene ein möglichst homogenes kegeliges Sprühbild einstellt. Bei der Brennstoffeindüsung 15 kann es sich um Luftunterstützte- oder Druck-Zerstäubung handeln. Das kegelige Flüssigbrennstoffprofil 24 wird von einem tangential einströmenden Verbrennungsluftstrom 10 und einem achsial herangeführten weiteren Verbrennungsluftstrom 10a umschlossen. In axialer Richtung wird die Konzentration des Flüssigbrennstoffes 23 fortlaufend durch die eingemischte Verbrennungsluft 10 abgebaut. Wird gasförmiger Brennstoff 20/21 eingesetzt, geschieht die Gemischbildung mit der Verbrennungsluft 10 direkt im Bereich der Lufteintrittsschlitze 16b, 17b in den Innenraum 18. Bei der Eindüsung von flüssigem Brennstoff 23 wird im Bereich des Wirbelaufplatzens, also im Bereich der Rückströmzone 25, die optimale, homogene Brennstoffkonzentration über den Querschnitt erreicht. Die Zündung erfolgt an der Spitze der Rückströmzone 25. Erst an dieser Stelle kann eine stabile Flammenfront 26 entstehen. Ein Rückschlag der Flamme ins Innere des Brenners 4, wie dies bei bekannten Vormischstrecken immer gegeben sein kann, wogegen dort mit komplizierten Flammenhaltern Abhilfe gesucht wird, ist hier nicht zu befürchten. Ist die Verbrennungsluft 10 vorgewärmt, wie dies unter Fig.1 erläutert ist, so stellt sich eine beschleunigte ganzheitliche Verdampfung des flüssigen Brennstoffes 23 ein, bevor der Punkt am Ausgang des Brenners 4 erreicht ist, an dem die Zündung des Gemisches stattfinden kann. Der Grad der Verdampfung ist selbstverständlich von der Grösse des Brenners 4, der Tropfengrösse und der Temperatur der Verbrennungsluftströme 10, 10a abhängig. Im Falle der vollständigen Verdampfung vor dem Eintritt in die Verbrennungszone sind die Schadstoffemissionswerte am niedrigsten. Bei der Gestaltung der Teilkegelkörper 16, 17 hinsichtlich Kegelwinkel und der Breite der tangentialen Lufteintrittsschlitze 16b, 17b sind enge Grenzen einzuhalten, damit sich das gewünschte Strömungsfeld der Luft mit ihrer Rückströmzone 25 im Bereich der Brennermündung zur Flammenstabilisierung einstellt. Allgemein ist zu sagen, dass eine Verkleinerung der Lufteintrittsschlitze 16b, 17b die Rückströmzone 25 weiter stromaufwärts verschiebt, wodurch dann allerdings das Gemisch früher zur Zündung käme. Immerhin ist hier zu sagen, dass die einmal geometrisch fixierte Rückströmzone 25 an sich positionsstabil ist, denn die Drallzahl nimmt in Strömungsrichtung im Bereich der Kegelform des Brenners zu. Die Achsialgeschwindigkeit lässt sich des weiteren durch axiale Zuführung von Verbrennungsluft 10a beeinflussen. Die Konstruktion des Brenners eignet sich vorzüglich, bei vorgegebener Baulänge des Brenners, die Grösse der tangentialen Lufteintrittsschlitze 16b, 17b zu verändern, indem die Teilkegelkörper 16, 17 zu- oder auseinander geschoben werden, wodurch sich der Abstand der beiden Mittelachsen 16a, 17a verkleinert resp. vergrössert, und dementsprechend sich die Spaltgrösse der tangentialen Lufteintrittsschlitze 16b, 17b verändert, wie dies aus Fig. 4 besonders gut hervorgeht. Selbstverständlich sind die Teilkegelkörper 16, 17 auch in einer anderen Ebene zueinander verschiebbar, wodurch sogar eine Überlappung derselben angesteuert werden kann. Ja, es ist sogar möglich, die Teilkegelkörper 16, 17 durch eine gegenläufige drehende Bewegung spiralartig einander zu verschieben. Somit hat man es in der Hand, die Form und die Grösse der tangentialen Lufteintritte 16b, 17b beliebig zu variieren, womit der Brenner 4 ohne Veränderung seiner Baulänge individuell angepasst werden kann.

Fig. 4 ist ein Schnitt etwa in der Mitte des Brenners, gemäss Schnittebene IV-IV aus Fig. 3. Die spiegelbildlich tangential angeordneten Einläufe 27, 28 sind als Mischstrecken konzipiert, in welchen die endgültige Aufbereitung der Verbrennungsluft 10 stattfindet. Das Frischluft/Rauchgas-Gemisch 9 wird nach seiner Durchströmung durch den Wärmetauscher, einem Jet-Injektor-System 3 zugeführt, das stromauf der tangentialen Eintrittsschlitze 16b, 17b in den Innenraum 18 des Brenners 4 wirkt. Die Wirkung besteht darin, dass die Saugkraft aus der Strömung des Frischluft/Rauchgas-Gemisches 9 durch den Jet-Injektor 3 dazu verwendet wird, einen weiteren Anteil Rauchgase 7 in die vorgenannte Strömung einzuleiten. Die Durchmischung dieses neuen Anteils Rauchgas 7 mit dem Gemisch 9 findet in den Mischstrecken 27, 28 statt.

## Patentansprüche

1. Verfahren zum Betrieb einer Feuerungsanlage für eine Verbrennung mittels eines Brenners (4), wobei als Verbrennungsluft (10, 10a) für den Brenner (4) ein aus Frischluft (6) und rezirkuliertem Rauchgas (7) gebildetes Gemisch (9) eingesetzt wird, und wobei das Gemisch (9) anschliessend auf dem Weg zum Brenner (4) mindestens einer Vorwärmung unterzogen wird, dadurch gekennzeichnet, dass das Gemisch (9) stromab der letzten Vorwärmung (2) und stromauf des Brenners (4) in einem Jet-Injektorsystem (3) eine weitere Vorwärmung und Vermischung durch weiteres rezirkuliertes Rauchgas (7) erfährt.

2. Verfahren nach Anspruch 1, dadurch gekennzeichnet, dass die Verbrennungsluft (10, 10a) bei einer Temperatur von 50-500°C einen 20-50%igen Rauchgasanteil enthält.

3. Feuerungsanlage zur Durchführung des Verfahrens nach Anspruch 1, im wesentlichen bestehend aus einem Brenner (4), einem dem Brenner (4) nachgeschalteten Brennraum (1), aus ausserhalb des Brennraumes (1) plazierten Mitteln zur Bildung einer Verbrennungsluft (10, 10a) aus einem Gemisch (9) aus Frischluft (6) und rückgeführtem Rauchgas (7) und aus mindestens einem stromab der Mittel zur Bildung der Verbrennungsluft (10, 10a) und stromauf des Brenners (4) plazierten Wärmetauscher (2, 2a), dadurch gekennzeichnet, dass der Brenner (4) in Strömungsrichtung aus mindestens zwei aufeinander positionierten hohlen, kegelförmigen Teilkörper (16, 17) besteht, deren Mittelachsen (16a, 17a) in Längsrichtung der kegelförmigen Teilkörper (16, 17) zueinander versetzt verlaufen, dergestalt, dass dadurch tangentiale Eintrittsschlitze (16b, 17b) für die Verbrennungsluft (10) zum Innenraum (18) des Brenners (4) entstehen, dass im von den kegeligen Teilkörpern (16, 17) gebildeten Innenraum (18) am Anfang des Brenners (4) eine Brennstoffdüse (14) plaziert ist, deren Brennstoffeindüsung (15) mittig der zueinander versetzten Mittelachsen (16a, 17a) der kegelförmigen Teilkörper (16, 17) liegt, dass sich stromauf jedes Eintrittsschlitzes (16b, 17b), ausserhalb des durch die kegeligen Teilkörper (16, 17) gebildeten Brenners (4) ein Einlaufkanal (27, 28) für die Verbrennungsluft (10) erstreckt, und dass im Einlaufkanal (17, 18) mindestens ein Jet-Injektorsystem (3) vorhanden ist.

4. Feuerungsanlage nach Anspruch 3, dadurch gekennzeichnet, dass sich die kegeligen Teilkörper (16, 17) in Strömungsrichtung unter einem festen Winkel erweitern.

5. Feuerungsanlage nach Anspruch 3, dadurch gekennzeichnet, dass die kegeligen Teilkörper (16, 17) in Strömungsrichtung eine zunehmende Kegelneigung aufweisen.

6. Feuerungsanlage nach Anspruch 3, dadurch gekennzeichnet, dass die kegeligen Teilkörper (16, 17) in Strömungsrichtung eine abnehmende Kegelneigung aufweisen.

7. Feuerungsanlage nach Anspruch 3, dadurch gekennzeichnet, dass im Bereich der tangentialen Eintrittsschlitze (16b, 17b) weitere Brennstoffdüsen (16d, 17d) vorhanden sind.

8. Feuerungsanlage nach den Ansprüchen 3 und 7, dadurch gekennzeichnet, dass durch die Brennstoffdüse (14) ein flüssiger Brennstoff und durch die Brennstoffdüsen (16d, 17d) ein gasförmiger Brennstoff zuführbar ist.

## Claims

1. Method of operating a firing installation for combustion by means of a burner (4), a mixture (9) formed from fresh air (6) and recirculated flue gas (7) being used as the combustion air (10, 10a) for the burner (4), and the mixture (9) then being subjected to at least one preheating on the way to the burner (4), characterized in that the mixture (9) undergoes, in a jet injector system (3) downstream of the last preheating (2) and upstream of the burner (4), a further preheating and mixing by further recirculated flue gas (7).

2. Method according to Claim 1, characterized in that the combustion air (10, 10a) at a temperature of 50-500°C contains a flue gas fraction of 20-50%.

3. Firing installation for carrying out the method according to Claim 1, essentially consisting of a burner (4), of a combustion chamber (1) downstream of the burner (4), of means placed outside the combustion chamber (1) for forming a combustion air (10, 10a) composed of a mixture (9) of fresh air (6) and recycled flue gas (7), and of at least one heat exchanger (2, 2a) placed downstream of the means for forming the combustion air (10, 10a) and upstream of the burner (4), characterized in that the burner (4) comprises at least two hollow, conical part bodies (16, 17) which are positioned, in the direction of flow, on one another and whose centre axes (16a, 17a) extend with a mutual offset in the longitudinal direction of the conical part bodies (16, 17) in such a way that they cause thereby the formation of tangential inlet slots (16b, 17b) for the combustion air (10) to the interior (18) of the burner (4), in that a fuel nozzle (14), whose fuel jet (15) is located centrally relative to the mutually offset centre axes (16a, 17a) of the conical part bodies (16, 17), is placed at the inlet of the burner (4) in the interior (18) formed by the conical part bodies (16, 17), in that an inlet channel (27, 28) for the combustion air (10) extends, upstream of each inlet slot (16b, 17b), outside the burner (4) formed by the conical part bodies (16, 17), and in that at least one jet injector system (3) is located in the inlet channel (17, 18 [sic]).

4. Firing installation according to Claim 3, characterized in that the conical part bodies (16, 17) widen under a fixed angle in the direction of flow.

5. Firing installation according to Claim 3, characterized in that the conical part bodies (16, 17) show an increasing conical taper in the direction of flow.

6. Firing installation according to Claim 3, characterized in that the conical part bodies (16, 17) show a decreasing conical taper in the direction of flow.

7. Firing installation according to Claim 3, characterized in that further fuel nozzles (16d, 17d) are present in the region of the tangential inlet slots (16b, 17b).

8. Firing installation according to Claims 3 and 7, characterized in that a liquid fuel can be fed through the fuel nozzle (14) and a gaseous fuel can be fed through the fuel nozzles (16d, 17d).

## Revendications

1. Procédé pour le fonctionnement d'une installation de chauffe pour une combustion au moyen d'un brûleur (4), dans lequel on emploie en guise d'air de combustion (10, 10a) pour le brûleur (4) un mélange (9) formé d'air frais (6) et de gaz de fumées recyclés (7), et dans lequel le mélange (9) est ensuite soumis à au moins un préchauffage sur son chemin vers le brûleur (4), caractérisé en ce qu'en aval du dernier préchauffage (2) et en amont du brûleur (4), le mélange (9) subit dans un système d'injecteurs à jet (3) un préchauffage supplémentaire et un mélange supplémentaire avec un supplément de gaz de fumées recyclés (7).

2. Procédé suivant la revendication 1, caractérisé en ce que l'air de combustion (10, 10a) à une température de 50-500°C contient une fraction de 20-50 % de gaz de fumées.

3. Installation de chauffe pour la mise en oeuvre du procédé suivant la revendication 1, se composant essentiellement d'un brûleur (4), d'une chambre de combustion (1) succédant au brûleur (4), de moyens placés à l'extérieur de la chambre de combustion (1) pour la formation d'un air de combustion (10, 10a) à partir d'un mélange (9) composé d'air frais (6) et de gaz de fumées recyclés (7), et d'au moins un échangeur de chaleur (2, 2a) placé en aval des moyens pour la formation de l'air de combustion (10, 10a) et en amont du brûleur (4), caractérisée en ce que le brûleur (4) se compose d'au moins deux corps partiels (16, 17) creux, de forme conique, placés l'un sur l'autre, dont les axes centraux (16a, 17a) sont orientés en direction longitudinale des corps partiels de forme conique (16, 17) avec un décalage l'un par rapport à l'autre, de telle manière qu'il se forme ainsi des fentes d'entrée tangentielles (16b, 17b) pour l'air de combustion (10) vers l'espace intérieur (18) du brûleur (4), en ce que, dans l'espace intérieur (18) formé par les corps partiels coniques (16, 17) est placé, au début du brûleur (4), un injecteur de combustible (14) dont la pulvérisation de combustible (15) se situe à mi-distance des axes centraux (16a, 17a) décalés l'un par rapport à l'autre des corps partiels de forme conique (16, 17), en ce qu'en amont de chaque fente d'entrée (16b, 17b), à l'extérieur du brûleur (4) formé par les corps partiels coniques (16, 17), s'étend un canal d'entrée (27, 28) pour l'air de combustion (10), et en ce qu'au moins un système d'injecteurs à jet (3) est présent dans le canal d'entrée (27, 28).

4. Installation de chauffe suivant la revendication 3, caractérisée en ce que les corps partiels coniques (16, 17) s'évasent sous un angle fixe dans la direction d'écoulement.

5. Installation de chauffe suivant la revendication 3, caractérisée en ce que les corps partiels coniques (16, 17) présentent une conicité croissante dans la direction d'écoulement.

6. Installation de chauffe suivant la revendication 3, caractérisée en ce que les corps partiels coniques (16, 17) présentent une conicité décroissante dans la direction d'écoulement.

7. Installation de chauffe suivant la revendication 3, caractérisée en ce que des injecteurs de combustible supplémentaires (16d, 17d) sont présents dans la région des fentes d'entrée tangentielles (16b, 17b).

8. Installation de chauffe suivant les revendications 3 et 7, caractérisée en ce que l'on peut introduire un combustible liquide par l'injecteur de combustible (14) et un combustible gazeux par les injecteurs de combustible (16d, 17d).
